# EUROPEAN PATENT APPLICATION

(11) **EP 4 718 855 A1**
(43) Date of publication of application: **01.04.2026**
(21) Application number: 24315446.5
(22) Date of filing: 27.09.2024
(51) Int. Cl.: H04N 21/81, H04N 21/854

(54) **METHOD AND APPARATUS FOR PROCESSING DEPTH DATA OF A SCENE**

(71) Applicant: Beijing Xiaomi Mobile Software Co., Ltd., Beijing Beijing 100085 (CN)
(72) Inventor: Potetsianakis, Emmanouil, Beijing, 100085 (CN); Thomas, Emmanuel, Beijing, 100085 (CN); Alexiou, Evangelos, Beijing, 100085 (CN)
(74) Representative: Zimmermann, Tankred Klaus

(57) **Abstract**

A method of processing depth data of a scene is described. Depth data of the scene is encapsulated in a data container, wherein the depth data is encapsulated independent of other data associated with the scene.

## Description

### Technical Field

The present disclosure relates to the field of providing depth information for a scene, like a scene depicted in a picture, an image or a video, and embodiments of the present disclosure concern improvements regarding a transmission of depth data representing respective depth values indicating distances in the scene relative to a certain point or to a certain plane. More specific embodiments of the present disclosure relate to encapsulating depth data in a data container independent of other data associated with the scene.

### Background

Conventionally, depth data of a scene is provided only as auxiliary data which is always associated with other data, like video or image data, of the scene. For example, depth data is encapsulated in an auxiliary data structure for a main data structure, like an auxiliary track when using an ISO Base Media File Format, ISOBMFF, for storage or transmission, or an auxiliary picture when using an ISO/IEC 23008-12 Image File Format for storage or transmission. The auxiliary track/picture are linked to the main track/picture which contains the image or video data of the scene.

Thus, there is a need to provide improvements for handling depth data of a scene.

### Summary

The present disclosure provides a method of processing depth data of a scene, the method comprising:
encapsulating depth data of the scene in a data container, wherein the depth data is encapsulated independent of other data associated with the scene.

The present disclosure provides a method of processing depth data of a scene, the method comprising:
retrieving the depth data from a data container, wherein the data container encapsulates depth data of the scene, wherein the depth data is encapsulated independent of other data associated with the scene.

Optionally, the data container is a structure having a format supporting carriage of structured timed data, e.g., a file according to an ISO Base Media File Format, ISOBMFF, or a main picture according to an ISO/IEC 23008-12 Image File Format.

Optionally, an explicit signaling or an implicit signaling indicates that the data container contains depth data, wherein the explicit signaling includes a media handler of depth data type, wherein the implicit signaling includes a depth flag assigned to an encoded video stream, or image series, or binary coded data.

Optionally,
the depth data represents respective depth values, the depth values representing distances in the scene relative to a certain point or to a certain plane, and
(a) the depth data is uncoded or uncompressed, wherein the depth data is represented using one or more of the following:
   - a binary format, e.g., as a binary stream or as a bit stream,
   - a structured text format, e.g., Comma Separated Values, CSV, or Extensible Markup Language, XML, or JavaScript Object Notation, JSON,
   - an uncoded or uncompressed video format,
   - one or more uncoded or uncompressed images, or
(b) the depth data is coded or compressed, wherein the depth data is coded or compressed using one or more of the following:
   - a codec for video, e.g., Advanced Video Coding, AVC, or High Efficiency Video Coding, HEVC, or Versatile Video Coding, VVC, or AOMedia Video 1, AV1,
   - a codec for images, e.g., Joint Photographic Experts Group, JPEG, or Portable Network Graphics, PNG,
   - a codec for depth data, e.g., Run length encoding and Variable Length encoding, RVL.

Optionally, information about the depth data is included in
- the data container, e.g., in a header of the data container or in a track header of a track in in the data container, the track containing the depth data, or
- a file which is separate from the data container, e.g., into a configuration file associated with the data container,

Optionally, the information about the depth data, e.g., metadata, comprises one or more of the following:
- information on a nature of the depth data,
- information on a processing of the depth data for obtaining one or more depth values,

Optionally, the information on the nature of the depth data, comprises one or more of the following:
- information on the method of obtaining the depth data, e.g., depth camera characteristics,
- information on the properties of the depth data, e.g., a near plane and a far plane.

Optionally, the information on processing the depth data comprises one or more of the following:
- information for extracting the depth data from the data container, e.g., depth data track identifier, or depth data byte ranges,
- information for decoding the extracted depth data, e.g., codec information, such as codec name, profile and/or level,
- information for pre-processing the depth data, e.g., an indication of inverse depth values, or a non-linear depth ranges distribution,
- post processing the depth data, e.g., a normalization minimum value and a normalization maximum value, or an out of range value.

Optionally, the method comprises transmitting/receiving the data container over a network, e.g., to/at one or more for the following:
- an application server,
- a service provider,
- a remote device,

Optionally, the data container is
- separated in a plurality of segments or parts for delivery over the network using, e.g., a Common Media Application Format, CMAF, or Dynamic Adaptive Streaming over HTTP, DASH, or
- a packet for delivery over the network using a network packetized stream. e.g. a Real-Time Transport Protocol, RTP, stream.

Optionally, the data container is a file according to the ISO Base Media File Format, ISOBMFF, and wherein the file comprises a first track including the depth data.

Optionally, one or more second tracks are associated with the first track, the one or more second tracks including second data associated with the scene.

Optionally, the second data associated with the scene comprises one or more of the following:
- additional depth data, e.g., depth data from a different point of view in the scene or depth enhancement data,
- video data, e.g., a YUV stream or an RGB stream,
- timed metadata information, e.g., semantics of the scene, events, or position and/or orientation information.

Optionally, the depth data comprise a base layer with a first depth resolution, and the additional depth data comprises one or more depth enhancement layers for at least a part of the base layer.

Optionally, the one or more depth enhancement layers comprise
- a bit-depth enhancement layer of a video codec used for enhancing the base depth frame, or
- values that represent distances which are further from or closer to the certain point or plane in the scene from which the values represented by the depth data are obtained, or
- values that increase a resolution of a depth pixel, when added to or otherwise combined with the values represented by the depth data.

Optionally, encapsulating the depth data comprises:
- receiving raw or encoded depth data,
- creating the data container,
- writing the depth data, e.g., each depth frame, or depth image, or depth matrix, into the data container, wherein the depth data is written into the data container in a timed structure, e.g., in the form of samples of a track according to the ISO Base Media File Format, ISOBMFF,
- writing an explicit signaling or an implicit signaling that indicates that the data container contains depth data, and
- writing metadata on the depth data, wherein timed metadata is written into a timed structure, e.g., a metadata track in accordance with the ISO Base Media File Format, ISOBMFF, and wherein untimed metadata is written into a non-timed structure, e.g. data container header, like a file header.

Optionally, retrieving the depth data from the data container comprises:
- receiving the data container, e.g., a file according to the ISO Base Media File Format, ISOBMFF,
- parsing data encapsulated in the data container,
- extracting metadata from the data encapsulated in the data container,
- using the extracted metadata for determining a nature of the depth data, and
- extracting the depth data from the data encapsulated in the data container.

The present disclosure provides a non-transitory computer-readable storage medium comprising instructions which, when executed by a computer, cause the computer to carry out the inventive method.

The present disclosure provides an apparatus of processing depth data of a scene, the apparatus comprising:
a data processing module for
- encapsulating depth data of the scene in a data container, wherein the depth data is encapsulated independent of other data associated with the scene, or
- retrieving the depth data from a data container, wherein the data container encapsulates depth data of the scene, wherein the depth data is encapsulated independent of other data associated with the scene.

The present disclosure provides a data container encapsulating depth data of the scene, wherein the depth data is encapsulated independent of other data associated with the scene.

The present disclosure provides a data stream having encoded thereinto data on a scene, wherein the data stream comprises:
a data container, the data container encapsulating depth data of the scene, wherein the depth data is encapsulated independent of other data associated with the scene.

The technical solutions provided according to embodiments of the present disclosure have the following beneficial effects.

In prior art approaches, depth data of a scene is provided only as auxiliary data which is always associated with other data, like video or image data, of the scene. For example, depth data is encapsulated in an auxiliary track (ISOBMFF) or in an auxiliary picture (ISO/IEC 23008-12 Image File Format) for the main track/picture which contains the image/video data. This leads to the following shortcomings:
- Since the depth data is only provided as auxiliary data of the main data, like video and image data, the depth data cannot be stored and signaled on its own.
- If a compression of the depth data is desired, the compression is limited to the video or image compression techniques of the main data, e.g., the compression techniques used for compressing a video or an image for with the depth data is provided. The requirement to compress the depth data with video or image compression techniques limits the eligible compression techniques, i.e., other types of compression techniques are not allowed.

- Conventional approaches rely, at least for some part, on in-video bitstream metadata, e.g., on supplemental enhancement information ( SEI), for the depth data, which may not work with another codec, e.g., AOMedia Video 1 (AV1). Also it is a significant computational overhead and delay to use a file parser for parsing metadata stored in the samples.

Embodiments of the present disclosure addresses the above drawbacks or shortcomings by providing an approach which encapsulates depth data of a scene in a data container with the depth data being encapsulated independent of other data associated with the scene. Other than conventional approaches, which send the depth data as secondary data, e.g., by sending the depth data to a remote service as a secondary stream to a video stream, embodiments of the present disclosure enable for example:
- An encapsulation of a depth stream without dependencies on any main stream, like a video stream.
- An encapsulation of multiple depth streams in the same container.
- An assignment of a video or image stream as a secondary stream, with the primary stream being a depth stream.

When compared to conventional approaches, embodiments of the present disclosure offer the following benefits:
- A reduction of a bandwidth required for cases where only the depth data is needed.
- The inventive approach does not rely on a video or image stream.
- It is not required to use a video or image compression scheme with a depth stream.
- The sending of multiple depth streams is enabled.
- Less processing is required since only the depth stream may be encoded.
- A transmission of a layer containing information to increase the bit depth of at least a part of a depth frame is enabled.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: illustrates an example of a depth value representation;
- Fig. 2(A)-2(B): illustrate examples of a depth image and a color image;
- Fig. 3(A)-3(B): illustrate passive and active stereo vision methods to generate depth images;
- Fig. 4(A)-4(B): illustrate structured light and time-of-flight methods to generate depth images;
- Fig. 5: illustrates an example of a conventional ISOBMFF file structure including video data and associated depth data;
- Fig. 6: illustrates another example of a conventional ISOBMFF file structure including video data and associated depth data;
- Fig. 7: illustrates yet another example of a conventional ISOBMFF file structure including video data and associated depth data;
- Fig. 8: illustrates Table G.3 in the HEVC standard defining different interpretations that are signaled in the depth_representation_type parameter of a depth representation information SEI message;
- Fig. 9: illustrates a flow diagram of an embodiment of a method of processing depth data of a scene (encapsulation of the depth data) in accordance with the present disclosure;
- Fig. 10: illustrates a data container in accordance with embodiments of the present disclosure;
- Fig. 11: illustrates a flow diagram of a method of producing encapsulated depth data into a data container in accordance with embodiments of the present disclosure;
- Fig. 12: illustrates an ISOBMFF file in accordance with an embodiment of the present disclosure including the depth data as main data and, in addition, video data as auxiliary data;
- Fig. 13: illustrates a base layer depth values of a scene including two objects;
- Fig. 14: an embodiment of the present disclosure for enhancing the depth resolution of the base layer of Fig. 13 using an enhancement layer containing information for a part of the base layer.
- Fig. 15: a further embodiment of the present disclosure for enhancing the depth resolution of the base layer of Fig. 13 using an enhancement layer containing information for the entire or whole base layer.
- Fig. 16: illustrates a flow diagram of a further embodiment of a method of processing depth data of a scene (retrieval of the depth data) in accordance with the present disclosure;
- Fig. 17: illustrates a flow diagram of an embodiment of a method of processing depth data of a scene, more specifically of retrieving depth data from a data container in accordance with embodiments of the present disclosure;
- Fig. 18: illustrates a block diagram of an apparatus of processing depth data of a scene (encapsulation of the depth data) in accordance with embodiments of the present disclosure;
- Fig. 19: illustrates a block diagram of an apparatus of processing depth data of a scene (retrieval of the depth data) in accordance with further embodiments of the present disclosure;
- Fig. 20: illustrates a data stream in accordance with embodiments of the present disclosure; and
- Fig. 21: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the term "image" or "image representation" may refer to a 2D array of samples, with each sample associated with a colors pace for visualization.

In the present disclosure, the term "depth camera center" may refer to a default origin point used as reference for capturing a depth image, if applicable.

In the present disclosure, the term "depth camera plane" may refer to a default origin plane used as reference for capturing a depth image, if applicable.

In the present disclosure, the term "depth image" may refer to an image with each sample of the image being associated with a value representing a distance relative to a depth camera, i.e., a depth camera center or a depth camera plane.

In the present disclosure, the term "depth map" may refer to a depth image that is associated with another image according to a known spatio-temporal relationship.

In the present disclosure, the term "RGB image" may refer to an image representation of RGB color data; each sample is associated with a color (RGB) value.

In the present disclosure, the term "RGBD image" may refer to an image representation of spatio-temporally aligned RGBD data; each sample is associated with a color (RGB) and a depth (D) value.

In the present disclosure, the term "depth data" may denote the unobstructed distances between fragments of an object and a given point of origin, along a certain direction. If a fragment of an object is occluded along the direction, its depth data cannot be measured.

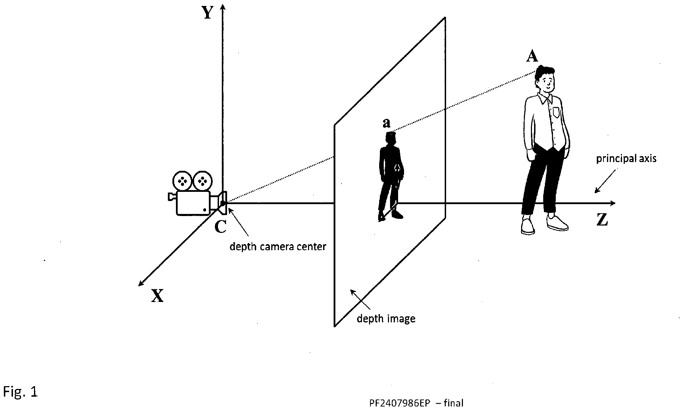

As mentioned above, a depth image may be defined as an image, with each sample associated with a value representing a distance relative to a depth camera, i.e., a depth camera center or a depth camera plane. Fig. 1 illustrates an example of capturing a depth image of a physical environment using a depth camera, assuming an ideal pinhole camera model. The acquired depth data are typically represented as sample intensity values of a 2D grayscale image. The sample locations of this 2D image correspond to discrete points in the captured 3D space, while the intensity values correspond to depth values as measured from the depth camera's viewpoint, e.g., in meters. As is illustrated in Fig. 1, given a point A on the observed real-world geometry and a corresponding sample a in the depth image, the value at a is set equal to the length of CA projected onto the principal axis Z, or equivalently the z-coordinate of A relative to the depth camera origin C. There are other distances that may be used to set the value of a, such as the Euclidean distance of CA. Yet, most commonly, the z-coordinate convention is used. In other words, Fig. 1 illustrates depth values in a depth image (modified from [1]).

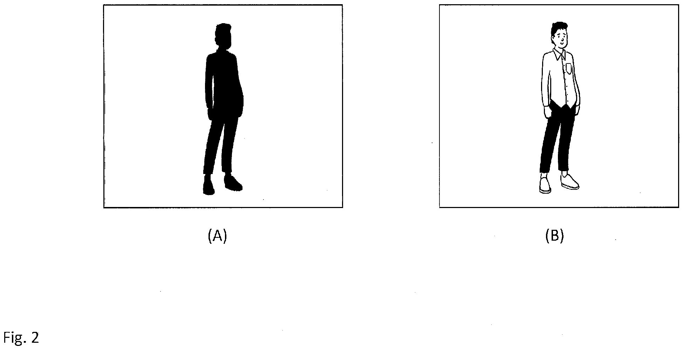

An RGBD image is typically expressed as a combination of a depth image and a color image captured at the same time and depicting the same model, as illustrated in Fig. 2(A) and Fig. 2(B). Fig. 2(A) illustrates a depth image, with each depth value represented as a different shade of grey, and Fig. 2(B) illustrates a color image showing the same model, a person in this example. The resolution, i.e., the number of samples, of depth images might differ and depends on the depth camera's specification. If different depth measurements are acquired over time, they are typically arranged in the form of a video, with each frame corresponding to the depth measurements at a specific time instance. The measured depth values are typically floating point numbers and are often quantized to limit storage requirements. Different depth cameras make use of different bit-depths in a trade-off between data size and data precision, with 16-bit representations being the most popular.

Depth data may be obtained in a variety of ways, using either physical or virtual depth cameras, or even may be generated using AI models. Existing methods may be classified based on the nature of the sensors they rely upon, as passive and active.
- Passive methods do not interfere with the scene; they are non-intrusive techniques based on recorded information in the form of 2D images that depict reflected light from the scene.
- Active methods interfere with the scene; they are intrusive techniques based on received energy after an emission of properly formatted light or any other form of electromagnetic energy.

Passive and active methods are not mutually exclusive. In fact, they may be used together to complement each other and lead to denser or more accurate depth measurements, at the expense of more complex designs and more expensive equipment.

Obtaining depth data using AI models may involve learning-based approaches which may be interpreted as a processing step in the depth image generation task, since they typically return depth data based on some input provided to them. Their integration can take place either in physical devices utilizing dedicated processing units or in virtual systems. For example, AI models can be employed to complete partial depth data of a depth image, infer depth data from two or more texture (color) images, or generate complete depth data based on a single texture image, independently of whether the input (i.e., depth or texture images) is obtained from physical sensors or computer-based techniques. AI models are also effective in solving specific tasks in the context of traditional depth acquisition methods, such as the identification of correspondences in stereo vision methods. The exploration of such approaches has been extensive in recent years, with most popular techniques focusing on stereo (see [2]) or monocular (see [3]) depth estimation, requiring a corresponding number of viewpoints as input.

Hereafter, reference is made to depth image generation methods as obtained from physical sensors or by using computer-based techniques. Both may accommodate either passive or active methods, with computer-based techniques relying on simulations.

### Sensor-based capture

The process of sensing depth in a real scene is also known as range imaging (see [4]) stating:
**"Range imaging** is the name for a collection of techniques that are used to produce a 2D image showing the distance to points in a scene from a specific point, normally associated with some type of sensor device.
The resulting **range image** has pixel values that correspond to the distance. If the sensor that is used to produce the range image is properly calibrated the pixel values can be given directly in physical units, such as meters."

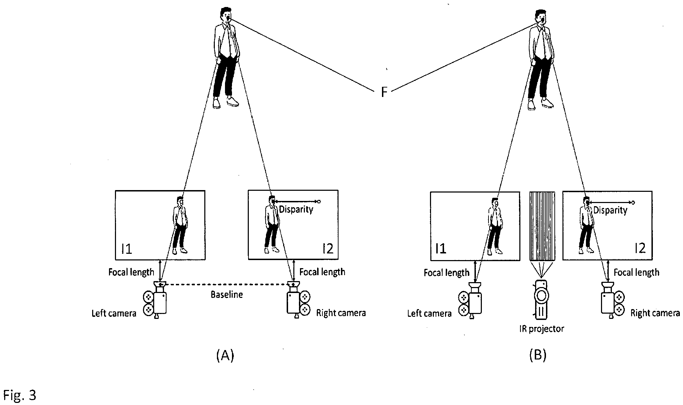

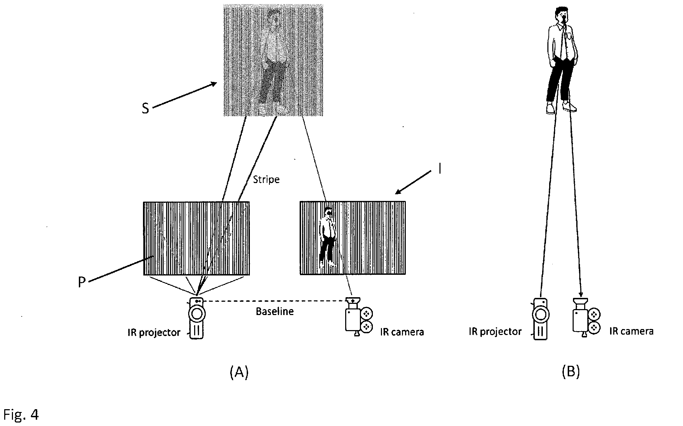

There are different sensors and techniques to generate depth images from a sensed environment. Among the most popular are the (passive/active) stereo vision, motion stereo, structured light, time-of-flight and LiDAR. Each method comes with its own advantages and disadvantages in terms of accuracy, resolution, complexity, cost, as well as sensitivity to environmental conditions and scene characteristics, among others. The working principles of these methods are shown in Fig. 3(A), Fig. 3(B), Fig. 4(A) and Fig. 4(B).

Fig. 3(A) illustrates a passive stereo vision method to generate depth images, and Fig. 3(B) illustrates an active stereo vision methods to generate depth images. Both passive and active stereo vision methods rely on the acquisition of images from at least two viewpoints (left and right camera in Fig. 3(A) and in Fig. 3(B)), resembling the operation of the human visual system. Concretely, feature points (see point F in Fig. 3(A) and Fig. 3(B) - the nose of the person) are identified in the captured images I1 and I2 and matched, thus, establishing correspondences. Triangulation is then applied in order to estimate disparity values, that reflect the amount of shift of pixels from one image to the other, and then can be easily converted to depth measurements. In the active stereo method of Fig. 3(B), an infrared (IR) projector and possibly an IR sensor are additionally included to overcome inabilities of passive stereo methods, e.g. to identify features in texture-less surfaces (e.g., walls) or in low-light environments. Motion stereo relies on the same principles to estimate depth (e.g., correspondence and triangulation), with the main difference of capturing images using the same moving camera from different viewpoints over time.

Fig. 4(A) illustrates a structured light method, and Fig. 4(B) illustrates A time-of-flight (right) method to generate depth images. In structured light methods, a known pattern P is emitted by a projector (e.g. an IR projector in Fig. 4(A)) for illuminating the scene as illustrated at S, a camera (e.g., an IR camera in Fig. 4(A)) captures the scene with the projected pattern as illustrated at I, and the depth is computed based on the deformations of this known pattern P using triangulation. In time-of-flight methods, non-visible short light pulses or light waves are emitted by a projector (e.g. an IR projector in Fig. 4(B)) and detected by a camera (e.g., an IR camera in Fig. 4(B)), with the depth calculated based on the time difference or the phase shift between emitted and detected light. LiDAR sensors follow the same working principle, however, they make use of laser beams and typically focus on larger depth ranges.

Existing depth sensors in the consumer market include, e.g.,
- Microsoft's Azure Kinect which uses the time-of-flight method.
- Intel's RealSense D435 depth camera using the (active) stereo vision method.
- Zed 2i depth camera is shown, using the (passive) stereo vision method.

### Computer-based techniques

It is fairly straightforward to obtain a depth image from a virtual scene, since the environment is fully known and under the control of a 3D rendering engine. Therefore, any physical depth sensor can be simulated by a virtual one, or other techniques that haven't been employed in physical devices may be implemented for obtaining the depth data.

### Coding of Depth data

Depth data may be coded using a certain codec, including video codecs e.g., MPEG video codecs or other video-based codecs.

The MPEG codecs may include the following codecs (see [5]):
- Multiview Video Coding (MVC)
- MVC+D
- MV-HEVC
- 3D-AVC and 3D-HEVC

The video-based codecs encode depth data by making use of image-based or video-based codecs. Most often, these methods rely on colorizing depth data, i.e., transforming them from depth to color space. On one hand, they make use of widely used infrastructure for image and video coding; however, since such methods are not optimized for depth data, their usage often leads to unnatural artifacts. One example is the compression approach implemented by Intel RealSense depth cameras by colorizing depth data (see [6]). Another transformation from depth to color domain is described in [7].

Depth data may also be coded by extending the video-based codecs, thereby obtaining depth codecs that enhance image/video-based codecs by applying some pre/post-processing techniques suitable for depth data. Their advantage is that these methods rely upon widely used infrastructure, while adapting the content for better efficiency. One example is given in [8], which proposes a pre-processing step that considers the noise characteristics of the depth sensor in use. Another example is given in [9] that depends on a post-processing, boundary reconstruction filter that is implemented in-loop.

Depth data may also be coded using decomposition-based codecs. Such depth codecs rely on some form of decomposition (e.g., object segmentation, edge detection, plane detection, tree decomposition, mesh generation) to distinguish between smooth surfaces and abrupt depth changes. Different techniques can then be employed to encode the decomposition, as well as the decomposed regions (e.g., image-based codecs, modeling functions, geometric wavelets, mesh coding).
- An example of this class of codecs is given in [10], and by reshaping the dynamic range, the authors are able to reflect the different importance of different depths, enabling dynamic range allocation. For ROI coding, the JPEG2000 is used driven by an edge detector to avoid artifacts on the edges.
- In [11],an edge detection followed by an image-based compression is proposed, and the results exhibit a noticeable improvement over JPEG 2000 and demonstrate suitability of the proposed compression to image warping applications. The proposed method manages to preserve the depth discontinuities and outperforms state of the art codecs at all rates.
- The proposed algorithm in [12] encodes smooth regions using piecewise-linear functions and the boundaries by line segments, considering characteristics of depth images. A top-down quad-tree decomposition of the image is performed to determine the regions.

Depth data may also be coded using generic-based codecs. Such depth codecs rely on algorithms for a compression of generic type of data (e.g., variable length coding). For the purpose of fast and low complexity compression, Microsoft developed the RVL codec (see [13]). The approach is to consider each depth map as generic data that can be compressed, ignoring the fact that the depth map is an image. Thus, RVL does not consider partitioning blocks (i.e. macro block) to compress the depth image. This method may be extended to accommodate dynamic content (see [14]).

### Packaging of Depth data

Depth data may be packetized using, e.g., the ISO/IEC 14496-12 : ISO Base Media File Format (ISBOMFF) or the ISO/IEC 23008-12 Image File Format.

As explained in the ISOBMFF specification (see [15]), this standard's principles are that files are formed as a series of objects, called boxes in this document. All data is contained in boxes; there is no other data within the file. This includes any initial signature required by the specific file format, all object-structured files conformant to Clause 4 (all object-structured files) shall contain a FileTypeBox. Top-level boxes (boxes not contained in other boxes) are indicated as being at 'file' level, with the notation "Container: File".

ISOBMFF allows to store multiple sequences of consecutives samples (audio, video, subtitles, etc.) into the so-called track concept. Tracks are differentiated by their media handler. Regarding the media handler, [15] states:

### "12.1.1 Media handler

Video media uses the 'vide' handler type in the HandlerBox of the MediaBox, as defined in 8.4.3.
Auxiliary video media uses the 'auxv' handler type in the HandlerBox of the MediaBox, as defined in 8.4.3.

An auxiliary video track is coded the same as a video track, but uses this different handler type, and is not intended to be visually displayed (e.g. it contains depth information, or other monochrome or color two-dimensional information). Auxiliary video tracks are usually linked to a video track by an appropriate track reference."

When multiple tracks coexist in the same file structure, it is useful to express their relationship such that the application can process them in the appropriate manner. For instance, two video tracks may be alternative from each other in which case the application should only process and display one of the two at a time. In another scenario, a file structure may contain one primary video (e.g. texture) and an auxiliary video (e.g. a depth map). In this case, it may be implicit that the auxiliary track complements the other video track however, this implicit relationship breaks when there are multiple pairs of video and auxiliary video. For this reason and many others, ISOBMFF provides the ability to link tracks to express a certain relationship. This track-to-track signaling is realized by the track reference concept. Regarding the reference concept, [15] states:

### "8.3.3 Track reference box

### 8.3.3.1 Definition

Box Type: 'tref' Container: TrackBox Mandatory: No Quantity: Zero or one This box includes a set of TrackReferenceTypeBoxes, each of which indicates, by its type, that the enclosing track has one of more references of that type. Each reference type shall occur at most once. Within each TrackReferenceTypeBox there is an array of track_lDs; within a given array, a given value shall occur at most once. Other structures in the file formats index through these arrays; index values start at 1.
Exactly one TrackReferenceBox can be contained within the TrackBox.
If this box is not present, the track is not referencing any other track in any way. The reference array is sized to fill the reference type box.

### 8.3.3.2 Syntax

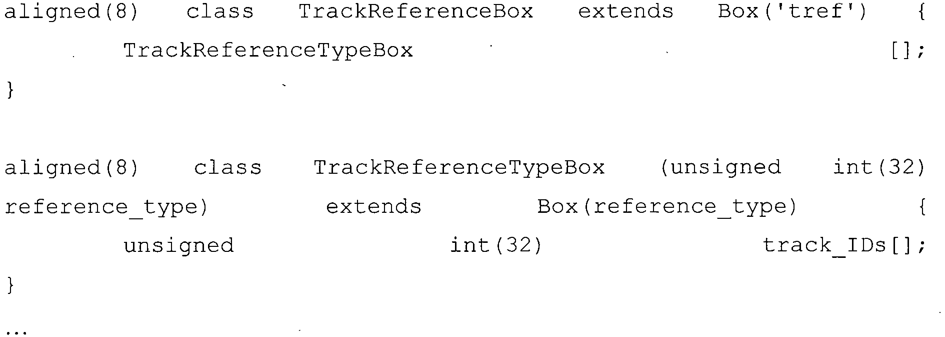

The reference_type shall be set to one of the following values, or a value registered or from a derived specification or registration:
- 'hint' the referenced track(s) contain the original media for this hint track.
- 'cdsc' links a descriptive or metadata track to the content which it describes
- 'font' this track uses fonts carried/defined in the referenced track.
- 'hind' indicates that the referenced track(s) may contain media data required for decoding of the track containing the track reference, i.e., it should only be used if the referenced hint track is used. The referenced tracks shall be hint tracks. The 'hind' dependency can, for example, be used for indicating the dependencies between hint tracks documenting layered IP multicast over RTP.
- 'vdep' this track contains auxiliary depth video information for the referenced video track.
- 'vplx' this track contains auxiliary parallax video information for the referenced video track.
- 'subt' this track contains subtitle, timed text or overlay graphical information for the referenced track or any track in the alternate group to which the track belongs, if any.
- 'thmb': this track contains thumbnail images for the referenced track. A thumbnail track shall not be linked to another thumbnail track with the 'thmb' item reference.
- 'auxl': this track contains auxiliary media for the indicated track (e.g. depth map or alpha plane for video).
- 'cdtg': describes the referenced media tracks and track groups collectively; the 'cdtg' track reference shall only be present in timed metadata tracks.
- 'shsc': links a shadow sync track to a main track; see clause 8.6.3

NOTE 1 A track with reference type ' auxl' could have a coding dependency; its use is clarified by specifications that use it.
NOTE 2 When multiple track references would describe an auxiliary video track, derived specifications might constrain or recommend which track references are used. For example, derived specifications might constrain or recommend whether to use 'vdep' or 'auxl' or both for auxiliary depth video track.
NOTE 3 Other structures index through the array of track references and hence position and order of them can be significant.
NOTE 4 A timed metadata track containing 'cdsc' track reference to a track_group_id value describes each track in the track group individually."

In addition to the media handler and track references, ISOBMFF allows to store metadata defined in ISO/IEC 23002-2 as metadata item in the track. Regarding the metadata, [15] states:

### "8.11.13 Auxiliary video metadata

An auxiliary video track used for depth or parallax information may carry a metadata item of type ' auvd' (auxiliary video descriptor); the data of that item shall be exactly one si_rbsp () as specified in ISO/IEC 23002-3. (Note that si_rbsp () is externally framed, and the length is supplied by the item location information in the file format). There may be more than one of these metadata items (e.g. one for parallax info and one for depth, in the case that the same stream serves)."

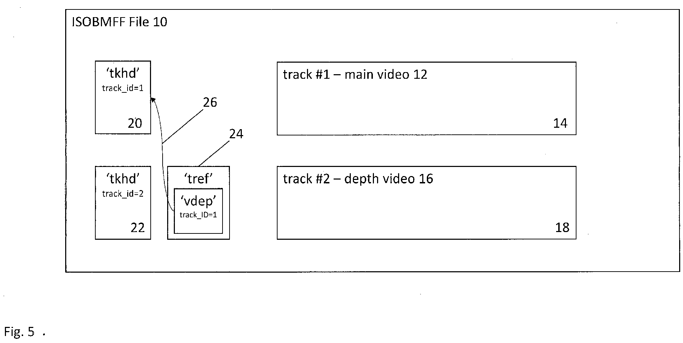

Fig. 5 illustrates an example of a conventional ISOBMFF file 10 including video data and associated depth data. The file 10 contains the main video data 12 of a scene in a primary or main track 14, and depth data 16 of the scene in a secondary or auxiliary track 18. The file 10 includes the track header box 20 (tkhd) indicating that track 14 is the main track, "track_id=1". Further, the file 10 includes the track header box 22 (tkhd) indicating that track 18 is the secondary track, "track_id=2", and the track reference box 24 providing the reference from the secondary track 18 to the main track 14. The track reference box 24 indicates the reference_type as 'vdep' meaning that the track 18 contains auxiliary depth video information for the video 12 referenced using "track_ID=1", as is indicated at 26.

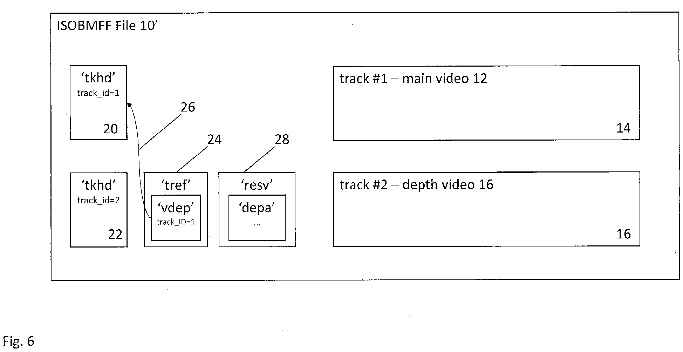

Fig. 6 illustrates another example of a conventional ISOBMFF file 10' including video data and associated depth data. The file 10' corresponds to the file 10 of Fig. 5 but incudes, in addition, the sample entry box 28 (resv) indicating a restricted media track. Such a media track can only be consumed by specific players and requires to be processed before consumption.

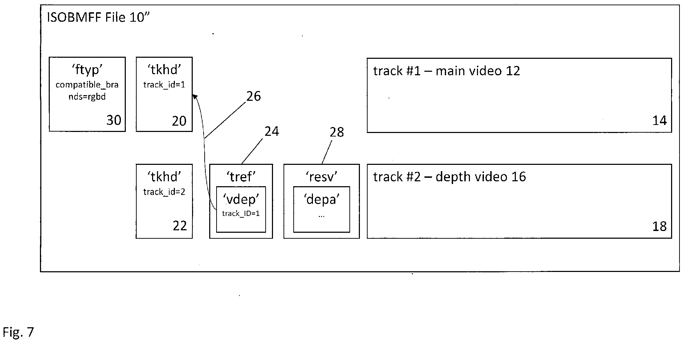

Fig. 7 illustrates yet another example of a conventional ISOBMFF file 10" including video data and associated depth data. The file 10" corresponds to the file 10' of Fig. 6 but incudes, in addition, the file type box 30 (ftyp) for identifying specifications to which file 10" complies. In the depicted example, file 10" complies with RGB, as is specified by compatible_brands=rgb.

In conclusion, ISOBMFF does provide signaling for a track which is an auxiliary track to a primary video track wherein the auxiliary track contains a depth map sequence. However, the properties of the depth track and the alignment between the depth track and the main video track are not signaled by the ISOBMFF box structures. Only the optional inclusion of the metadata from ISO/IEC 23002-3 may complement the description of the depth video track but still with the limits inherent to ISO/IEC 23002-3.

Also, a depth map contained in a track is per definition always an auxiliary track of a main track.

The ISO/IEC 23008-12 Image File Format (see [16]) defines a format for storing images and its metadata into a file format structure (ISOBMFF). This standard's principles are that the formats defined in ISO/IEC 23008-12 enable the interchange, editing, and display of images, as well as the carriage of metadata associated with those images, the Image File Format builds on tools defined in ISO/IEC 14496-12 to define an interoperable storage format for a single image, a collection of images, and sequences of images, the ISO/IEC 23008-12 specifies brands for the storage of images and image sequences conforming to High Efficiency Video Coding (HEVC), and this format defines normative structures used to contain metadata, how to link that metadata to the images, and defines how metadata of certain forms is carried.

In particular, the Image File Format specifies how to store depth maps as auxiliary pictures into a file. There are two variants of a depth map format that the ISO/IEC 23008-12 defines of the storage of. The first one is called CICP-compliant depth map identified by the URN "urn:mpeg:mpegB:cicp:systems:auxiliary:depth". [16] states: "Depth maps should be encoded in monochrome format (i.e., 4:0:0 chroma format) if possible; if they are encoded in color, they shall be encoded in a color format with a luma plane and chroma planes, e.g. as 4:2:0 YCbCr; in which case only the luma plane is relevant, and the chroma planes should be ignored in rendering."

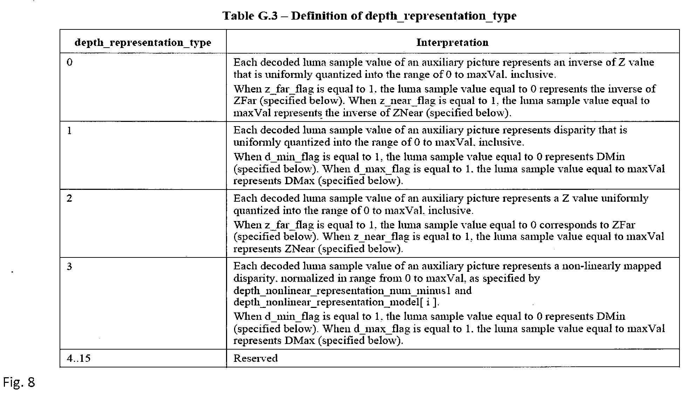

The CCIP-compliant depth map is the preferred one according to ISO/IEC 23008-12 as opposed to the other possible format identified by the URN "urn:mpeg:hevc:2015:auxid:2". This second depth format is defined in the HEVC standard and can accommodate different sub variants of the interpretation of the luma samples. Table G.3 in the HEVC standard (see Fig. 8) defines the different interpretations that are signaled in the depth_representation_type parameter of the depth representation information SEI message.

In conclusion, the ISO/IEC 23008-12 Image File format provides equivalent signaling to the ISOBMFF but for images. That is, depth maps are only stored as auxiliary pictures of main pictures.

Thus, in conventional approaches the depth data of a scene is provided only as auxiliary data which is always associated with other data, like video or image data, of the scene: As discussed above depth data may be encapsulated in an auxiliary track (ISOBMFF) or in an auxiliary picture (ISO/IEC 23008-12 Image File Format) for the main track/picture which contains the image/video data. This leads to the following shortcomings:
- Since the depth data is only provided as auxiliary data of the main data, like video and image data, the depth data cannot be stored and signaled on its own.
- If a compression of the depth data is desired, the compression is limited to the video or image compression techniques of the main data, e.g., the compression techniques used for compressing a video or an image for with the depth data is provided. The requirement to compress the depth data with video or image compression techniques limits the eligible compression techniques, i.e., other types of compression techniques are not allowed.
- Conventional approaches rely, at least for some part, on in-video bitstream metadata, e.g., on supplemental enhancement information ( SEI), for the depth data, which may not work with another codec, e.g., AOMedia Video 1 (AV1). Also it is tedious to use a file parser for parsing metadata in the samples

Embodiments of the present disclosure addresses the above drawbacks or shortcomings by providing an approach which encapsulates depth data of a scene in a data container with the depth data being encapsulated independent of other data associated with the scene. Other than conventional approaches, which send the depth data as secondary data, e.g., by sending the depth data to a remote service as a secondary stream to a video stream, embodiments of the present disclosure enable for example:
- An encapsulation of a depth stream without dependencies on any main stream, like a video stream.
- An encapsulation of multiple depth streams in the same container.
- An assignment of a video or image stream as a secondary stream, with the primary stream being a depth stream.

When compared to conventional approaches, embodiments of the present disclosure offer the following benefits:
- A reduction of a bandwidth required for cases where only the depth data is needed.
- The inventive approach does not rely on a video or image stream.
- It is not required to use a video or image compression scheme with a depth stream.
- The sending of multiple depth streams is enabled.
- Less processing is required since only the depth stream may be encoded.
- A transmission of a layer containing information to increase the bit depth of at least a part of a depth frame is enabled.

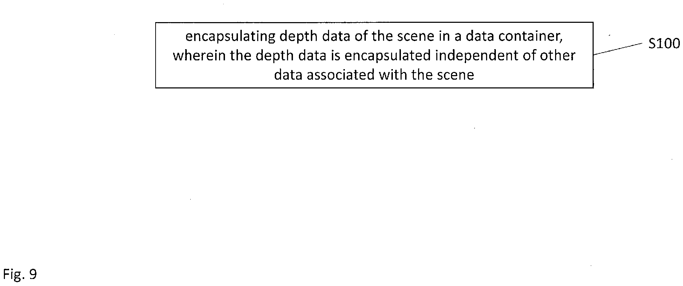

Fig. 9 illustrates a flow diagram of an embodiment of a method of processing depth data of a scene. The method includes the following:
S100: Encapsulating depth data of the scene in a data container, wherein the depth data is encapsulated independent of other data associated with the scene.

In accordance with embodiments, the depth data may be referred to as timed depth data. Timed depth data means that the depth data consists of a series of depth images (also known as depth frames) with each depth frame being assigned on a specific time point on a timeline. It is also called a depth video and is the depth equivalent of a (color) video.

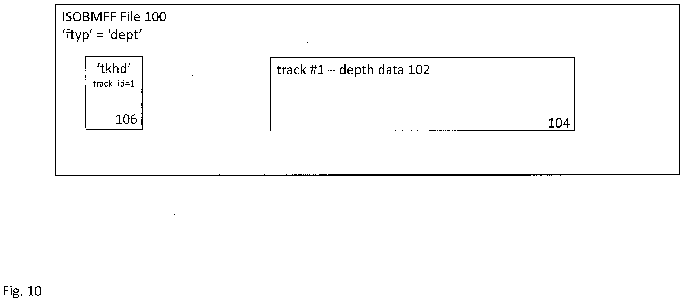

Fig. 10 illustrates a data container in accordance with embodiments of the present disclosure. The data container encapsulates depth data of the scene in accordance with embodiments of the present disclosure, wherein the depth data is encapsulated independent of other data associated with the scene encoded data stream. In the embodiment of Fig. 10 the data container is an ISOBMFF file 100 of the file type (ftyp) "dept", indicating that it contains depth data. The file 100 contains the depth data 102 of the scene in a first or main track 104, i.e., in a track that is independent of any other data that might be associated with the scene. The file 100 includes the track header box 106 (tkhd) indicating that the track is the main track, "track_id=1". It is noted that the present disclosure is not limited to is an ISOBMFF file, rather, the data container may be any structure having a format supporting carriage of structured timed data. In accordance with other embodiments, the data container may be main picture according to an ISO/IEC 23008-12 Image File Format. In the embodiment of Fig. 10, it is explicitly signaled that the data container contains depth data by including into the data container 100 the media handler "dept" indicating the file to include depth data type. In accordance with other embodiments, it may be implicitly signaled that the data container contains depth data, e.g., assigning a depth flag to an encoded video stream, or image series, or binary coded data.

Embodiments provide a method and a device that receives timed depth data, either encoded or raw and encapsulates them in a container along with any associated metadata. In accordance with further embodiments, the encapsulated depth data may be communicated via a network with an application server or a service provider or a remote device.

Embodiments of the present disclosure enable a packaging of depth data in a container. The depth data may be represented as distances from a point or plane, may be uncompressed (e.g. in a binary format, in a structured text format, like CSV, XML, JSON etc., in an uncompressed video format or in an uncompressed image, or in another array-like structure), or may be compressed using a codec for video (e.g. AVC, HEVC, VVC, AV1) or a codec for images (e.g. JPEG, PNG) a codec for depth data, e.g., Run length encoding and Variable Length encoding, RVL. The data container may be of any format that supports carriage of structured timed data (e.g. ISOBMFF). Additional information required to extract, decode, pre or post process the depth data may be carried within the data container (e.g. as metadata or in a file header), or using an out-of-band signaling (e.g. in a configuration file).

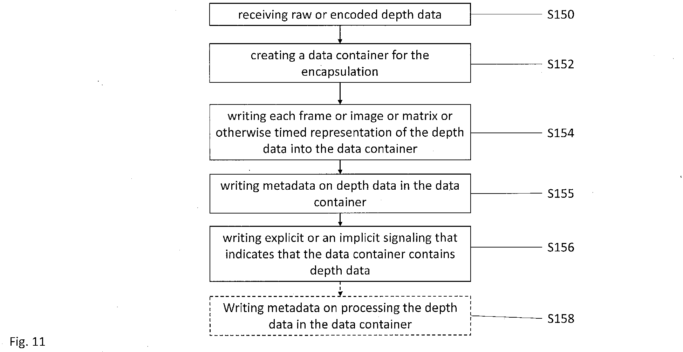

Fig. 11 illustrates a flow diagram of a method of producing encapsulated depth data into a data container in accordance with embodiments of the present disclosure. The data container may be file (e.g. an ISOBMFF file) or other container. The method includes:
Step S150: Receiving raw or encoded depth data.
Step S152: Creating a data container for the encapsulation.
Step S 154: Writing each frame or image or matrix or otherwise timed representation of the depth data into the data container. For example, the depth data may be written in a timed structure, e.g., as samples in a track according to the ISOBMFF.
Step S155: Writing an explicit signaling or an implicit signaling that indicates that the data container contains depth data.
Step S156: Writing metadata on depth data in the data container, e.g., metadata on the nature of the depth data. The nature of the depth data may comprise information on the method of obtaining the depth data, e.g., depth camera characteristics, and/or information on the properties of the depth data, e.g., a near plane and a far plane. Timed metadata may be written into a timed structure, e.g., into a metadata track in accordance with the ISOBMFF, and untimed metadata may be written into a non-timed structure, e.g., into a file header.
Step S158: Optionally, metadata on processing the depth data, e.g. normalization minimum and maximum values, may be written into the data container as well. The metadata on the processing of the depth data may comprise s one or more of the following:
   - information for extracting the depth data from the data container, e.g., depth data track identifier, or depth data byte ranges,
   - information for decoding the extracted depth data, e.g., codec information, such as codec name, profile and/or level,
   - information for pre-processing the depth data, e.g., an indication of inverse depth values, or a non-linear depth ranges distribution,
   - post processing the depth data, e.g., a normalization minimum value and a normalization maximum value, or an out of range value.

In accordance with embodiments, the data container or file may be separated in smaller segments or parts to be ready for a delivery over a network using, e.g., CMAF or DASH.

In accordance with embodiments, the data container or the file may be a packet for a network packetized stream, e.g., an RTP stream.

In accordance with embodiments, a bitstream containing the depth data is packaged in a media container, such as a media container according to the ISO Base Media File Format (ISOBMFF). The bitstream may be placed in a track or in a similar structure, and other metadata or information may be stored in a track header, in a configuration file, or in another structure or file suitable for carrying the metadata. In accordance with embodiments the ISO/IEC 14496-12 ISO Base Media File Format may be extended as follows:

### X Media-specific definitions

### X.1 Depth media

### X.1.1 Media handler

Depth media uses the ' dept' handler type in the HandlerBox of the MediaBox, as defined in 8.4.3. Multiple depth tracks may be present in the file.

### X.1.2 Media header

### X.1.2.1 Definition

Box Types:'dmhd'
Container: MediaInformationBox
Mandatory: Yes
Quantity: Exactly one

Depth tracks use the DepthMediaHeaderBox in the MediaInformationBox as defined in 8.4.5. The DepthMediaHeaderBox contains general presentation information, independent of the coding, for depth media. Note that the flags field has the value 1.

### X.1.2.2 Syntax

```
 aligned(8) class DepthMediaHeaderBox
         extends FullBox('dmhd', version = 0, 1) {
     unsigned int(16) width;
     unsigned int(16) height;
     unsigned int(16) near_plane;
     unsigned int(16) far_plane;
     unsigned int(16) focal_plane;
     unsigned int(1) is_inverse;
     unsigned int(1) is_normalised;
     unsigned int(6) reserved;
     · unsigned int(8) units;
     · unsigned int(8) distance;
     }
```

### X.1.2.3 Semantics

version is an integer that specifies the version of this box
width and height are the maximum depth width and height of the stream described by this sample entry, in elementary units. The default value of 0 indicates that the depth is not expressed in a matrix-like format.
is_inverse indicates whether the depth is represented with inversed values. The default value of 0 indicates that the values are not inversed.
near_plane and far_plane are the values of the near and far plane respectively. The default value of 0 indicates that the planes are not set.
focal_plane is the focal plane of the depth values with respect to the camera plane. The default value of 0 indicates that the plane is not set, i.e. it is the camera plane.
is_normalised indicates whether the depth values are normalized in the range 0 to 1. The default value of 0 indicates that the values are not normalised.
units the value of depth data units, defined as following:
   0: no units
   1: the values are in meters
   2: the values are in millimetres
   3-255: reserved
distance the distance represented, as following:
   0: undefined
   1: Euclidean
   2: perpendicular
   3-255: reserved

### X.1.3 Sample entry

### X.1.3.1 Definition

Depth tracks use DepthSampleEntry.
In depth tracks, the frame_count field shall be 1 unless the specification for the media format explicitly documents this template field and permits larger values. That specification must document both how the individual frames of depth are found (their size information) and their timing established. That timing might be as simple as dividing the sample duration by the frame count to establish the frame duration.
The width and height in the depth sample entry document the depth pixel counts that the codec will deliver; this enables the allocation of buffers. Since these are counts they do not take into account pixel aspect ratio.

### X.1.3.2 Syntax

```
 class DepthSampleEntry(codingname) extends SampleEntry
 (codingname){
     template unsigned int(16) frame_count = 1;
     uint(8)[32] compressorname;
 }
```

### X.1.3.3 Semantics

frame_count indicates how many frames of compressed depth are stored in each sample. The default is 1, for one frame per sample; it may be more than 1 for multiple depth frames per sample.
compressorname is a name, for informative purposes. It is formatted in a fixed 32-byte field, with the first byte set to the number of bytes to be displayed, followed by that number of bytes of displayable data encoded using UTF-8, and then padding to complete 32 bytes total (including the size byte). The field may be set to 0. I

In accordance with embodiments, a depth stream may be encoded using a non-image-based (including video) codec. The result is a binary stream of coded depth data or depth information. Potential metadata for decoding the depth stream may be encapsulated with the depth data.

In accordance with embodiments, the data container is an ISOBMFF file, like the file 100 in Fig. 10, the main track 102 of which contains the depth data. One or more additional tracks are associated with the main track, and these additional tracks may carry other depth data, e.g., from a different point of view, video data, e.g. a YUV or RGB stream, timed metadata information, e.g., semantics of the scene, events, position/orientation information, or any other type of timed media, like audio, graphics or haptics. In accordance with embodiments, the one or more additional tracks may be transmitted as auxiliary video track(s).

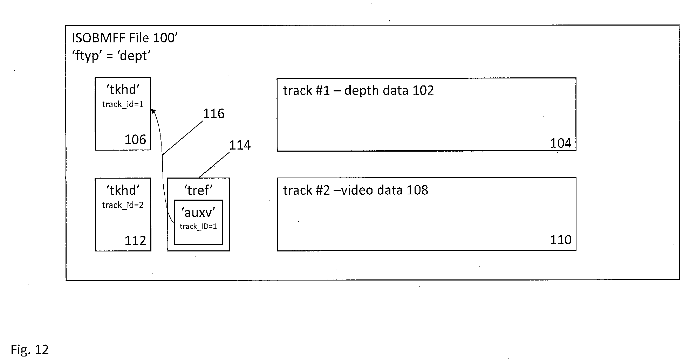

Fig. 12 illustrates an ISOBMFF file 100' in accordance with an embodiment of the present disclosure including the depth data as main data and, in addition, video data as auxiliary data. In addition to the ISOBMFF file 100 of Fig. 10, ISOBMFF file 100' includes video data 108 (or other data mentioned above) in a secondary or auxiliary track 110. The file 100' includes the track header box 106 (tkhd) indicating that track 104 containing the depth data is the main track, "track_id=1". Further, the file 100' includes the track header box 112 (tkhd) indicating that track 110 containing the video data 108 is the secondary track, "track_id=2", and the track reference box 114 providing the reference from the secondary track 110 to the main track 104. The track reference box 114 indicates the reference_type as 'auxv' meaning that the track 110 contains auxiliary video information associated with or for the depth data 102 referenced using "track_ID=1", as is indicated at 116. Thus, the auxiliary video media 110 may the 'auxv' handler type in the HandlerBox of the MediaBox as defined in 8.4.3 of ISO/IEC 14496-12 ISO Base Media File Format. The auxiliary video track may be coded the same as the depth data track, but uses the different handler type, and is linked to the depth data track by an appropriate track reference, like "track_ID=1".

In accordance with embodiments, the above described additional tracks may include a separate track in the same data container also containing the depth data or in another data container. The separate track may carry an enhancement layer (EL) containing contain additional depth data frames for the whole or for a region of an original depth frame. The original depth fame may also be referred to as a base layer BL. In accordance with embodiments, the EL may be a bit-depth enhancement layer of a video codec, e.g., VVC, if the BL is encoded using the same video codec. In accordance with other embodiments, the EL may be a frame carrying additional depth data, e.g., values for distances further or closer than the BL, or values that, when added to or otherwise combined with the corresponding BL values, increase the resolution of the depth pixel. In the latter case it may be signaled how the EL is to be applied on the BL. This may be achieved by providing mapping information in the track header, e.g., in the case of an ISOBMFF encapsulation.

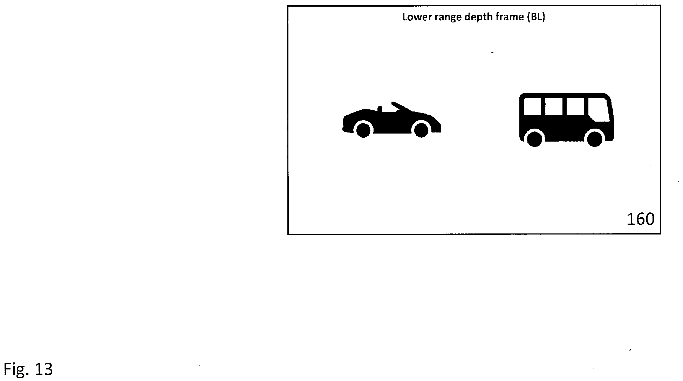

Fig. 13 illustrates a base layer or frame 160 of depth values of a scene including two objects. The lower range depth frame BL provides depth data concerning at least two objects, the car and the bus, with a first or original depth resolution.

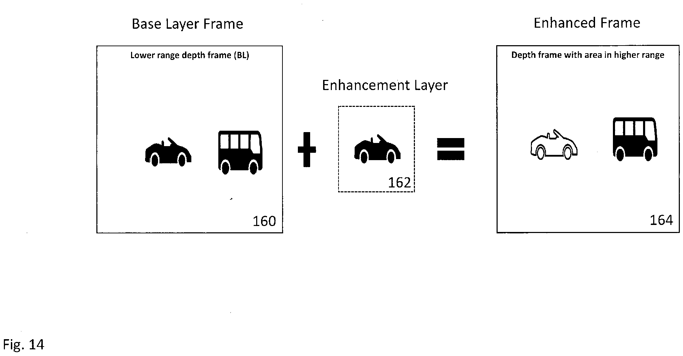

Fig. 14 illustrates an embodiment of the present disclosure for enhancing the depth resolution of the base layer 160 using an EL 162 containing information for a part of the BL frame. The EL 162 contains information for increasing the range depth of one area containing one of the objects, the car. The EL 162 is applied on the BL 160 which results in an enhanced frame 164 that has an enhanced higher-range area. The bus is still in lower bit depth range but the car to which the enhancement information was applied has now a higher bit depth range when compared to the original resolution. In such a scenario, since the BL 160 has different dimensions from the EL 162, information on how to spatially align the EL 162 on the BL 160 may also be transmitted together with the BL 160 and the EL 162.

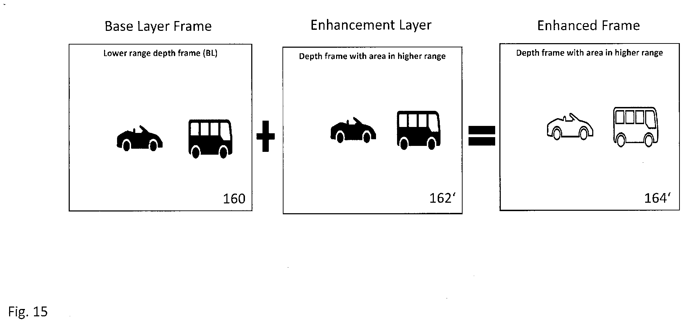

Fig. 15 illustrates an embodiment of the present disclosure for enhancing the depth resolution of the base layer 160 using an EL 162' containing information for the entire or whole BL 160 frame. The EL 162'contains information for increasing the range depth of the BL 160. The EL 162' is applied on the BL 160 which results in an enhanced frame 164' that has an overall enhanced higher-range area. The bus and the car have now a higher bit depth range when compared to the original resolution. The EL 162' has the same dimensions as the BL 160 which results in the full enhanced frame 164'.

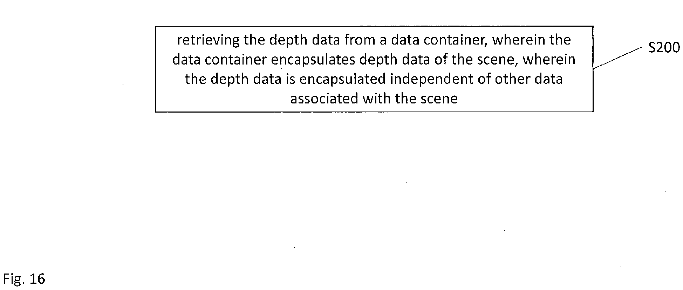

Fig. 16 illustrates a flow diagram of an embodiment of a method of processing depth data of a scene, more specifically of retrieving depth data from a data container . The method includes the following:
S200: Retrieving the depth data from a data container, wherein the data container I encapsulates depth data of the scene, wherein the depth data is encapsulated independent of other data associated with the scene. In accordance with embodiments, the depth data is encapsulated in the data container according to the above described embodiments of the present disclosure.

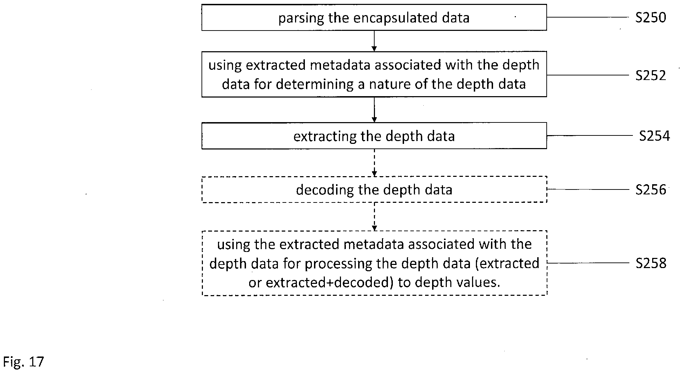

Fig. 17 illustrates a flow diagram of an embodiment of a method of retrieving depth data which has been encapsulated into a data container in accordance with embodiments of the present disclosure. The data container may be file (e.g. an ISOBMFF file) or other container. The method includes:
Step S250: Parsing the encapsulated data.
Step S252: Using extracted metadata associated with the depth data for determining a nature of the depth data. The nature of the depth data may comprise information on the method of obtaining the depth data, e.g., depth camera characteristics, and/or information on the properties of the depth data, e.g., a near plane and a far plane. In accordance with embodiments, the metadata may also include information on the processing of the depth data. The information on the processing of the depth data may comprise s one or more of the following:
   - information for extracting the depth data from the data container, e.g., depth data track identifier, or depth data byte ranges,
   - information for decoding the extracted depth data, e.g., codec information, such as codec name, profile and/or level,
   - information for pre-processing the depth data, e.g., an indication of inverse depth values, or a non-linear depth ranges distribution,
   - post processing the depth data, e.g., a normalization minimum value and a normalization maximum value, or an out of range value.
Step S254: Extracting the depth data.
Step S256: Optionally, decoding the depth data.
Step S258: Optionally, using the extracted metadata associated with the depth data for transforming, normalizing or otherwise processing the extracted or extracted and decoded depth data to depth values. In accordance with embodiments, the processing includes getting from the metadata a minimum value and a maximum value for the depth values and normalizing the values of the depth data within the range of values from the maximum value to the maximum value.

### Further embodiments

So far, the inventive concept has been described with reference to aspects and embodiments concerning methods of processing depth data. In accordance with further embodiments, the present disclosure also provides an apparatus of processing depth data, which may be part of or include a packager of an extractor for packaging depth data into/extracting depth data from a data container, e.g., by a method according to the previously described embodiments.

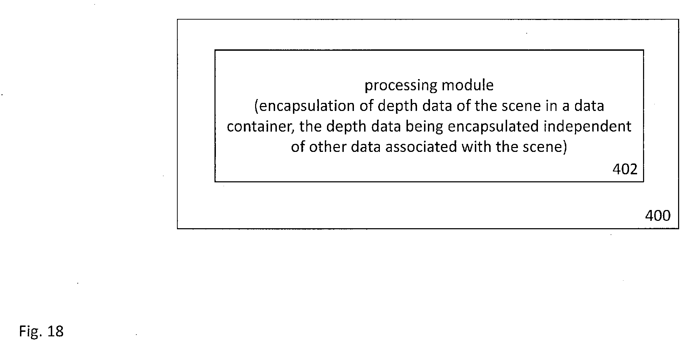

Fig. 18 illustrates a block diagram of an apparatus of processing depth data of a scene in accordance with embodiments of the present disclosure. The apparatus 400 includes the following modules:
402: A data processing module configured to operate in accordance with embodiments of the present disclosure for encapsulating depth data of the scene in a data container, wherein the depth data is encapsulated independent of other data associated with the scene.

In accordance with embodiments of the present disclosure the apparatus may be part of or may include a packager for packaging the data container, which encapsulates the depth data and, optionally, or second data associated with the scene, like image or video data, into a data stream, e.g., a bitstream.

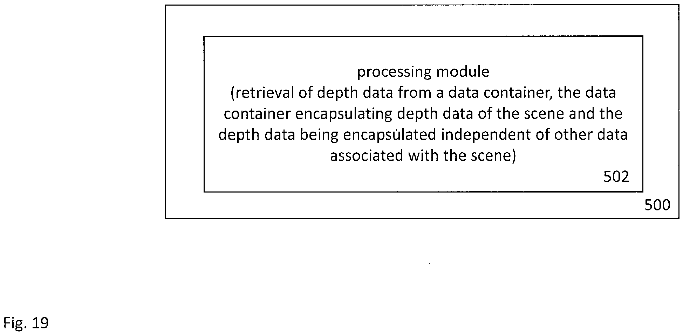

Fig. 19 illustrates a block diagram of an apparatus of processing depth data of a scene in accordance with further embodiments of the present disclosure. The apparatus 500 includes the following modules:
502: A data processing module configured to operate in accordance with embodiments of the present disclosure for retrieving the depth data from a data container, wherein the data container encapsulates depth data of the scene, wherein the depth data is encapsulated independent of other data associated with the scene. The depth data may be packaged or encapsulated into the data container by a method according to the previously described embodiments.

In accordance with embodiments of the present disclosure the apparatus may be part of or may include an extractor for extracting the depth data and, optionally, second data associated with the scene, like image or video data from a data container included/encoded in a data stream, e.g., a from bitstream.

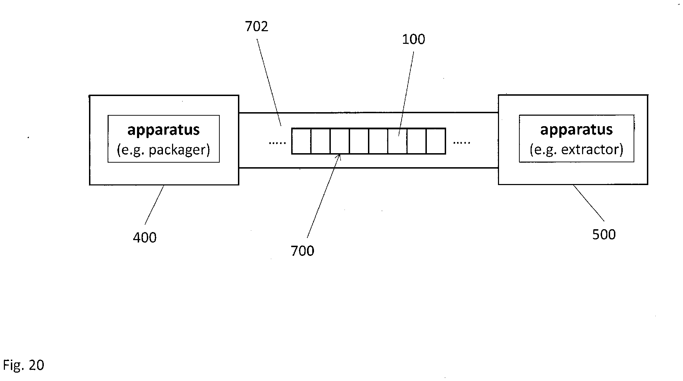

Fig. 20 illustrates a data stream 700 in accordance with embodiments of the present disclosure, which has packaged thereinto a data container encapsulating depth data of a scene picture in accordance with embodiments of the present disclosure. For example, the data stream 700 includes the data container 100 (see Fig. 10) which is provided by the apparatus 400, e.g., by a packager, that performs the inventive method for encapsulating the depth data. The data stream 700 is transmitted via a wired or wireless transmission medium 702, like cable or a radio link, to the apparatus 500, e.g., to an extractor, that performs the inventive method for retrieving from the data container 100 the encapsulated depth data.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

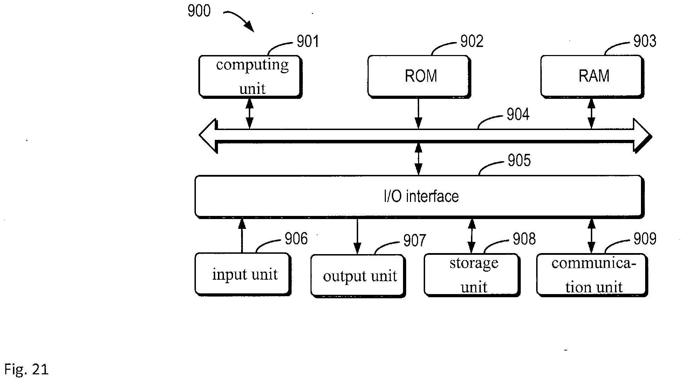

Fig. 21 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides method of processing depth data of a scene, the method comprising:
   encapsulating depth data of the scene in a data container, wherein the depth data is encapsulated independent of other data associated with the scene.
A 2^{nd} embodiment provides a method of processing depth data of a scene, the method comprising:
   retrieving the depth data from a data container, wherein the data container encapsulates depth data of the scene, wherein the depth data is encapsulated independent of other data associated with the scene.
A 3^{rd} embodiment provides the method of the 1^{st} embodiment or 2^{nd} embodiment, wherein the data container is a structure having a format supporting carriage of structured timed data, e.g., a file according to an ISO Base Media File Format, ISOBMFF, or a main picture ' according to an ISO/IEC 23008-12 Image File Format, and.
A 4^{th} embodiment provides the method of any one of the preceding embodiments, wherein an explicit signaling or an implicit signaling indicates that the data container contains depth data, wherein the explicit signaling may include a media handler of depth data type, wherein the implicit signaling may include a depth flag assigned to an encoded video stream, or image series, or binary coded data.
A 5^{th} embodiment provides the method of any one of the preceding embodiments, wherein the depth data represents respective depth values, the depth values representing distances in the scene relative to a certain point or to a certain plane.
A 6^{th} embodiment provides the method of the 5^{th} embodiment, wherein the depth data is represented by
   - a frame, each sample of the frame being associated with a depth value, or
   - a depth image of the scene, each sample of the depth image being associated with a depth value, or
   - a matrix of samples, each sample of matrix being associated with a depth value.
A 7^{th} embodiment provides the method of any one of the preceding embodiments, wherein the depth data is uncoded or uncompressed, wherein the depth data may be represented using one or more of the following:
   - a binary format, e.g., as a binary stream or as a bit stream,
   - a structured text format, e.g., Comma Separated Values, CSV, or Extensible Markup Language, XML, or JavaScript Object Notation, JSON,
   - an uncoded or uncompressed video format,
   - one or more uncoded or uncompressed images.
An 8^{th} embodiment provides the method of any one of the 1^{st} to 6^{th} embodiments, wherein the depth data is coded or compressed, wherein the depth data may be coded or compressed using one or more of the following:
   - a codec for video, e.g., Advanced Video Coding, AVC, or High Efficiency Video Coding, HEVC, or Versatile Video Coding, VVC, or AOMedia Video 1, AV1,
   - a codec for images, e.g., Joint Photographic Experts Group, JPEG, or Portable Network Graphics, PNG,
   - a codec for depth data, e.g., Run length encoding and Variable Length encoding, RVL.
A 9^{th} embodiment provides the method of the 8^{th} embodiment, wherein information for decoding or decompressing the depth data is included in
   - the data container, e.g., in a header of the data container or in a track header of a track in the data container, the track containing the depth data, or
   - a file which is separate from the data container, e.g., into a configuration file associated with the data container.
A 10^{th} embodiment provides the method of the 9^{th} embodiment, wherein the information for decoding or decompressing the depth data comprises information on a codec used for encoding the depth data.
An 11^{th} embodiment provides the method of any one of the preceding embodiments, wherein information about the depth data is included in
   - the data container, e.g., in a header of the data container or in a track header of a track in in the data container, the track containing the depth data, or
   - a file which is separate from the data container, e.g., into a configuration file associated with the data container.
A 12^{th} embodiment provides the method of the 11^{th} embodiment, wherein the information about the depth data, e.g., metadata, comprises one or more of the following:
   - information on a nature of the depth data,
   - information on a processing of the depth data for obtaining one or more depth values.
A 13^{th} embodiment provides the method of the 12^{th} embodiment, wherein the information on the nature of the depth data, comprises one or more of the following:
   - information on the method of obtaining the depth data, e.g., depth camera characteristics,
   - information on the properties of the depth data, e.g., a near plane and a far plane.
A 14^{th} embodiment provides the method of the 12^{th} embodiment or the 13^{th} embodiment, wherein the information on the processing the depth data comprises one or more of the following:
   - information for extracting the depth data from the data container, e.g., depth data track identifier, or depth data byte ranges,
   - information for decoding the extracted depth data, e.g., codec information, such as codec name, profile and/or level,
   - information for pre-processing the depth data, e.g., an indication of inverse depth values, or a non-linear depth ranges distribution,
   - post processing the depth data, e.g., a normalization minimum value and a normalization maximum value, or an out of range value.
A 15^{th} embodiment provides the method of any one of the preceding embodiments, comprising: transmitting/receiving the data container over a network, e.g., to/from one or more for the following:
   - an application server,
   - a service provider,
   - a remote device.
A 16^{th} embodiment provides the method of the 15^{th} embodiment, wherein the data container is separated in a plurality of segments or parts for delivery over the network using, e.g., a Common Media Application Format, CMAF, or Dynamic Adaptive Streaming over HTTP, DASH.
A 17^{th} embodiment provides the method of the 15^{th} embodiment, wherein the data container is a packet for delivery over the network using a network packetized stream. e.g. a Real-Time Transport Protocol, RTP, stream.
An 18^{th} embodiment provides the method of any one of the preceding embodiments, wherein the data container is a file according to the ISO Base Media File Format, ISOBMFF, and wherein the file comprises a first track including the depth data.
A 19^{th} embodiment provides the method of the 18^{th} embodiment, wherein one or more second tracks are associated with the first track, the one or more second tracks including second data associated with the scene.
A 20^{th} embodiment provides the method of the 19^{th} embodiment, wherein the one or more second tracks are transmitted as one or more auxiliary tracks.
A 21^{st} embodiment provides the method of the 19^{th} embodiment or 20^{th} embodiment, wherein the second data associated with the scene comprises one or more of the following:
   - additional depth data, e.g., depth data from a different point of view in the scene or depth enhancement data,
   - video data, e.g., a YUV stream or an RGB stream,
   - timed metadata information, e.g., semantics of the scene, events, or position and/or orientation information.
A 22^{nd} embodiment provides the method of the 21^{st} embodiment, wherein a track header of the one or more second tracks includes mapping information for mapping the additional depth data to the depth data.
A 23^{rd} embodiment provides the method of the 21^{st} embodiment or the 22^{nd} embodiment, wherein the depth data comprise a base layer with a first depth resolution, and the additional depth data comprises one or more depth enhancement layers for at least a part of the base layer.
A 24^{th} embodiment provides the method of the 23^{rd} embodiment, wherein the one or more depth enhancement layers comprise a bit-depth enhancement layer of a video codec used for enhancing the base depth frame.
A 25^{th} embodiment provides the method of the 23^{rd} embodiment, wherein the one or more depth enhancement layers comprise
   - values that represent distances which are further from or closer to the certain point or plane in the scene from which the values represented by the depth data are obtained, or
   - values that increase a resolution of a depth pixel, when added to or otherwise combined with the values represented by the depth data.
A 26^{th} embodiment provides the method of any one of the 23^{rd} to 25^{th} embodiments, wherein the one or more depth enhancement layers have
   - a dimension matching a dimension of the base layer, or
   - a dimension less than the base layer, wherein information for spatially aligning the depth enhancement layer and the base layer are provided, e.g., in the track header.
A 27^{th} embodiment provides the method of any one of the 19^{th} to 26^{th} embodiments, wherein the one or more second tracks are
   - in the data container which comprises the track including the depth data, and/or
   - in a second data container.
A 28^{th} embodiment provides the method of any one of the preceding embodiments, wherein the scene comprises one or more of the following:
   - a real scene, wherein the depth data is obtained using, e.g., physical or virtual depth cameras and/or artificial intelligence, AI, models,
   - a virtual scene, wherein the depth data is obtained, e.g., using computer-based techniques, like a 3D rendering engine.
A 29^{th} embodiment provides the method of the 28^{th} embodiment, wherein the depth data from the real scene is obtained using
   - a passive method using recorded information in the form of 2D images that depict reflected light from the scene, and/or
   - an active method using received energy after an emission of electromagnetic energy, like properly formatted light.
A 30^{th} embodiment provides the method of the 1^{st} embodiment, wherein encapsulating the depth data comprises:
   - receiving raw or encoded depth data,
   - creating the data container,
   - writing the depth data, e.g., each depth frame, or depth image, or depth matrix, into the data container, wherein the depth data is written into the data container in a timed structure, e.g., in the form of samples of a track according to the ISO Base Media File Format, ISOBMFF,
   - writing an explicit signaling or an implicit signaling that indicates that the data container contains depth data,
   - writing metadata on the depth data, wherein timed metadata is written into a timed structure, e.g., a metadata track in accordance with the ISO Base Media File Format, ISOBMFF, and wherein untimed metadata is written into a non-timed structure, e.g. data container header, like a file header, and
   - writing, optionally, metadata on processing the depth data.
A 31^{st} embodiment provides the method of the 2^{nd} embodiment, wherein retrieving the depth data from the data container comprises:
   - receiving the data container, e.g., a file according to the ISO Base Media File Format, ISOBMFF,
   - parsing data encapsulated in the data container,
   - extracting metadata from the data encapsulated in the data container,
   - using the extracted metadata for determining a nature of the depth data, and
   - extracting the depth data from the data encapsulated in the data container.
A 32^{nd} embodiment provides the method of the 31^{st} embodiment, wherein retrieving the depth data from the data container comprises:
   - decoding the depth data, and/or
   - using the extracted metadata for processing the depth data to obtain respective depth values.
A 33^{rd} embodiment provides the method of any one of the preceding embodiments, wherein the data container is a file according to the ISO Base Media File Format, ISOBMFF, and comprises a MediaBox containing the depth data, the MediaBox using a 'dept' handler type in the HandlerBox,
   wherein a depth media header is defined as follows:
      Box Types: ' dmhd'
      Container: MediaInformationBox
      Mandatory: Yes
      Quantity: Exactly one,
   wherein a syntax of the depth media header is as follows:

      ```
 aligned(8) class DepthMediaHeaderBox
     extends FullBox('dmhd', version = 0, 1) {
     unsigned int(16) width;
     unsigned int(16) height;
     unsigned int(16) near_plane;
     unsigned int(16) far_plane;
     unsigned int(16) focal_plane;
     unsigned int(1) is_inverse;
     unsigned int(1) is_normalised;
     unsigned int(6) reserved;
     unsigned int(8) units;
     unsigned int(8) distance;
     }
```

      with:
      version is an integer that specifies the version of this box,
      width and height are the maximum depth width and height of the stream described by this sample entry, in elementary units; the default value of 0 indicates that the depth is not expressed in a matrix-like format,
      is_inverse indicates whether the depth is represented with inversed values; the default value of 0 indicates that the values are not inversed,
      near_plane and far_plane are the values of the near and far plane respectively; the default value of 0 indicates that the planes are not set,
      focal_plane is the focal plane of the depth values with respect to the camera plane; the default value of 0 indicates that the plane is not set, i.e. it is the camera plane,
      is_normalised indicates whether the depth values are normalized in the range 0 to 1; the default value of 0 indicates that the values are not normalized,
      units the value of depth data units, defined as following:
         0: no units
         1: the values are in meters
         2: the values are in millimetres
         3-255: reserved,
      distance the distance represented, as following:
         0: undefined
         1: Euclidean
         2: perpendicular
         3-255: reserved.
A 34^{th} embodiment provides the method of the 33^{rd} embodiment, wherein the file comprises a depth track defined as a sample entry DepthSampleEntry having the following syntax:

   ```
 class DepthSampleEntry(codingname) extends SampleEntry
 (codingname){
     template unsigned int(16) frame_count = 1;
     uint(8)[32] compressorname;
 }
```

   with:
   frame_count indicates how many frames of compressed depth are stored in each sample; the default is 1, for one frame per sample; it may be more than 1 for multiple depth frames per sample,
   compressorname is a name, for informative purposes; it is formatted in a fixed 32-byte field, with the first byte set to the number of bytes to be displayed, followed by that number of bytes of displayable data encoded using UTF-8, and then padding to complete 32 bytes total (including the size byte); the field may be set to 0.

A 35^{th} embodiment provides a non-transitory computer-readable storage medium comprising instructions which, when executed by a computer, cause the computer to carry out the method of any one of the preceding embodiments.
A 36^{th} embodiment provides an apparatus of processing depth data of a scene, the apparatus comprising:
   a data processing module for encapsulating depth data of the scene in a data container, wherein the depth data is encapsulated independent of other data associated with the scene.
A 37^{th} embodiment provides an apparatus of processing depth data of a scene, the apparatus comprising:
   a data processing module for retrieving the depth data from a data container, wherein the data container encapsulates depth data of the scene, wherein the depth data is encapsulated independent of other data associated with the scene.
A 38^{th} embodiment provides a data container encapsulating depth data of the scene, wherein the depth data is encapsulated independent of other data associated with the scene.
A 39^{th} embodiment provides the data container of the 38^{th} embodiment, wherein the data container is a file according to the ISO Base Media File Format, ISOBMFF, and comprises a MediaBox containing the depth data, the MediaBox using a 'dept' handler type in the HandlerBox,
   wherein a depth media header is defined as follows:
      Box Types: 'dmhd'
      Container: MediaInformationBox
      Mandatory: Yes
      Quantity: Exactly one,
   wherein a syntax of the depth media header is as follows:

      ```
 aligned(8) class DepthMediaHeaderBox
     extends FullBox('dmhd', version = 0, 1) {
     unsigned int(16) width;
     unsigned int(16) height;
     unsigned int(16) near_plane;
     unsigned int(16) far_plane;
     unsigned int(16) focal_plane;
     unsigned int(1) is_inverse;
     unsigned int(1) is_normalised;
     unsigned int(6) reserved;
     unsigned int(8) units;
     unsigned int(8) distance;
     }
```

      with:
      version is an integer that specifies the version of this box,
      width and height are the maximum depth width and height of the stream described by this sample entry, in elementary units; the default value of 0 indicates that the depth is not expressed in a matrix-like format,
      is_inverse indicates whether the depth is represented with inversed values; the default value of 0 indicates that the values are not inversed,
      near_plane and far_plane are the values of the near and far plane respectively; the default value of 0 indicates that the planes are not set,
      focal_plane is the focal plane of the depth values with respect to the camera plane; the default value of 0 indicates that the plane is not set, i.e. it is the camera plane,
      is_normalised indicates whether the depth values are normalized in the range 0 to 1; the default value of 0 indicates that the values are not normalized,
      units the value of depth data units, defined as following:
         0: no units
         1: the values are in meters
         2: the values are in millimetres
         3-255: reserved,
      distance the distance represented, as following:
         0: undefined
         1: Euclidean
         2: perpendicular
         3-255: reserved.
A 40^{th} embodiment provides the data container of the 39^{th} embodiment, wherein the file comprises a depth track defined as a sample entry DepthSampleEntry having the following syntax:

   ```
 class DepthSampleEntry(codingname) extends SampleEntry
 (codingname){
     template unsigned int(16) frame_count = 1;
     uint(8)[32] compressorname;
 }
```

   with:
   frame_count indicates how many frames of compressed depth are stored in each sample; the default is 1, for one frame per sample; it may be more than 1 for multiple depth frames per sample,
   compressorname is a name, for informative purposes; it is formatted in a fixed 32-byte field, with the first byte set to the number of bytes to be displayed, followed by that number of bytes of displayable data encoded using UTF-8, and then padding to complete 32 bytes total (including the size byte); the field may be set to 0.

A 41^{st} embodiment provides the data container of any one of the 38^{th} to 40^{th} embodiments, wherein the depth data is encapsulated in the data container according to the method of any one of the 1^{st} to 34^{th} embodiments.
A 42^{nd} embodiment provides a data stream having encoded thereinto data on a scene, wherein the data stream comprises:
   a data container, the data container encapsulating depth data of the scene, wherein the depth data is encapsulated independent of other data associated with the scene.
A 43^{rd} embodiment provides the data stream of the 42^{nd} embodiment, wherein the depth data is encapsulated in the data container according to the method of any one of the 1^{st} to 34^{th} embodiments.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### Abbreviations

- AOM: Alliance for Open Media
- AV1: AOMedia Video 1
- AVC: ISO/IEC 14496-10 Advanced Video Coding (AVC) / ITU-T Rec. H.264
- CVS: Coded Video Sequence
- ISOBMFF: ISO/IEC 14496-12 ISO Base Media File Format
- H.265: ITU's name of HEVC
- HEVC: ISO/IEC 23008-2 High Efficiency Video Coding (HEVC) / ITU-T Rec. H.265
- MPEG: Moving Picture Experts Group
- MVC: Multiview Video Coding [refers to ISO/IEC 14496 10 when the techniques in Annex H (Multiview Video Coding) are in use]
- MVC+D: Multiview Video Coding Plus Depth [refers to ISO/IEC 14496-10 when the techniques in Annex I (Multiview and Depth Video Coding) are in use]
- MV-HEVC: Multiview High Efficiency Video Coding [refers to ISO/IEC 23008-2 when the techniques in Annex G (Multiview High Efficiency Video Coding) are in use]
- MVD: Multiview Video Coding Plus Depth [refers to ISO/IEC 14496-10 when the techniques in Annex I (Multiview and Depth Video Coding) or Annex J (Multiview and Depth Video with Enhanced Non-Base View Coding) are in use]
- RGB: Red Green Blue (color space)
- SEI: Supplemental Enhancement Information
- VVC: ISO/IEC 23090-3 Versatile Video Coding (VVC) / ITU-T Rec. H.266
- VSEI: Versatile Supplemental Enhancement Information messages for coded video bitstreams / ITU-T Rec H.274

### References

[1] ARCore, https://developers.google.com/ar/develop/java/depth/developer-guide
[2] Fehn, Christoph. "A 3D-TV approach using depth-image-based rendering (DIBR)." In Proc. of VIIP, vol. 3, no. 3. 2003
[3] Sun, Wenxiu, Lingfeng Xu, Oscar C. Au, Sung Him Chui, and Chun Wing Kwok. "An overview of free view-point depth-image-based rendering (DIBR)." In APSIPA Annual Summit and Conference, pp. 1023-1030. 2010
[4] Wikipedia contributors, "Range imaging," Wikipedia, The Free Encyclopedia, https://en.wikipedia.org/w/index.php?title=Range_imaging&oldid=1050828429
[5] Chen, Ying, and Anthony Vetro. "Next-generation 3D formats with depth map support." IEEE MultiMedia 21, no. 2 (2014): 90-94
[6] Depth image compression by colorization for Intel RealSense Depth Cameras, https://dev.intelrealsense.com/docs/depth-image-compression-by-colorization-for-intel-realsense-depth-cameras
[7] Pece, F., Kautz, J., Weyrich, T.: Adapting standard video codecs for depth streaming. In: Proceedings of EGVE-JVRC 2011, pp. 59-66, Aire-la-Ville, Switzerland. Eurographics Association (2011)
[8] J. Fu, D. Miao, W. Yu, S. Wang, Y. Lu and S. Li, "Kinect-Like Depth Data Compression," in IEEE Transactions on Multimedia, vol. 15, no. 6, pp. 1340-1352, Oct. 2013, doi: 10.1109/TMM.2013.2247584.
[9] Oh, K.J., Yea, S., Vetro, A. and Ho, Y.S., 2009. Depth reconstruction filter for depth coding. Electronics letters, 45(6), pp.305-306.
[10] R. Krishnamurthy, Bing-Bing Chai, Hai Tao and S. Sethuraman, "Compression and transmission of depth maps for image-based rendering," Proceedings 2001 International Conference on Image Processing (Cat. No.01CH37205), Thessaloniki, Greece, 2001, pp. 828-831 vol.3, doi: 10.1109/ICIP.2001.958248
[11] Zanuttigh P, Cortelazzo GM. Compression of depth information for 3D rendering. In2009 3DTV Conference: The True Vision-Capture, Transmission and Display of 3D Video 2009 May 4 (pp. 1-4). IEEE.
[12] Morvan, Y. and Farin, D., 2005, June. Novel coding technique for depth images using quadtree decomposition and plane approximation. In Visual Communications and Image Processing 2005 (Vol. 5960, pp. 1187-1194). SPIE.
[13] Wilson, A.D., 2017, October. Fast lossless depth image compression. In Proceedings of the 2017 ACM International Conference on Interactive Surfaces and Spaces (pp. 100-105).
[14] Jun, H. and Bailenson, J., 2020, March. Temporal rvl: a depth stream compression method. In 2020 IEEE conference on virtual reality and 3D user interfaces abstracts and workshops (VRW) (pp. 664-665). IEEE.
[15] ISO/IEC 14496-12 "Information technology - Coding of audio-visual objects - Part 12: ISO base media file format"
[16] ISO/IEC 23008-12 Information technology - High efficiency coding and media delivery in heterogeneous environments - Part 12: Image File Format
[17] ISO/IEC 23009-1 Dynamic adaptive streaming over HTTP (DASH) - Part 1: Media presentation description and segment formats, https://standards.iso.org/ittf/PubliclyAvailableStandards/c083314_ISO_IEC%202 3009-1_2022(en).zip
[18] ISO/IEC 15938-17:2022 Information technology - Multimedia content description interface - Part 17: Compression of neural networks for multimedia content description and analysis. https://www.iso.org/standard/78480.html
[19] ISO/IEC 23001 17 "Information technology - MPEG Systems technologies - Part17: Uncompressed video and images in ISO Base Media File Format"
[21] Overview of ISO Base Media File Format. https://mpeg.chiariglione.org/standards/mpeg-4/iso-base-media-file-format/overview-iso-base-media-file-format (Slides - start here: https://mpeg.chiariglione.org/sites/default/files/files/standards/parts/docs/N18093 _ISOFF%28TS%29.pptx )
[20] ISO/IEC 14496-15 "Information technology - Coding of audio-visual objects - Part 15: Carriage of network abstraction layer (NAL) unit structured video in the ISO base media file format" https://www.iso.org/standard/83336.html
[21] RTP: A Transport Protocol for Real-Time Applications https://www.rfc-editor.org/rfc/rfc3550
[22] RFC 3984. RTP Payload Format for H.264 Video. https://www.ietf.org/rfc/rfc3984.txt
[2] RFC 4566. SDP: Session Description Protocol. https://datatracker.ietf.org/doc/html/rfc4566

## Claims

1. A method of processing depth data of a scene, the method comprising:
encapsulating depth data of the scene in a data container, wherein the depth data is encapsulated independent of other data associated with the scene.

2. A method of processing depth data of a scene, the method comprising:
retrieving the depth data from a data container, wherein the data container encapsulates depth data of the scene, wherein the depth data is encapsulated independent of other data associated with the scene.

3. The method of claim 1 or 2, wherein
the data container is a structure having a format supporting carriage of structured timed data, e.g., a file according to an ISO Base Media File Format, ISOBMFF, or a main picture according to an ISO/IEC 23008-12 Image File Format, and
optionally, an explicit signaling or an implicit signaling indicates that the data container contains depth data, wherein the explicit signaling includes a media handler of depth data type, wherein the implicit signaling includes a depth flag assigned to an encoded video stream, or image series, or binary coded data.

4. The method of any one of the preceding claims, wherein
the depth data represents respective depth values, the depth values representing distances in the scene relative to a certain point or to a certain plane, and
(a) the depth data is uncoded or uncompressed, wherein the depth data is represented using one or more of the following:
- a binary format, e.g., as a binary stream or as a bit stream,
- a structured text format, e.g., Comma Separated Values, CSV, or Extensible Markup Language, XML, or JavaScript Object Notation, JSON,
- an uncoded or uncompressed video format,
- one or more uncoded or uncompressed images, or
(b) the depth data is coded or compressed, wherein the depth data is coded or compressed using one or more of the following:
- a codec for video, e.g., Advanced Video Coding, AVC, or High Efficiency Video Coding, HEVC, or Versatile Video Coding, VVC, or AOMedia Video 1, AV1,
- a codec for images, e.g., Joint Photographic Experts Group, JPEG, or Portable Network Graphics, PNG,
- a codec for depth data, e.g., Run length encoding and Variable Length encoding, RVL.

5. The method of any one of the preceding claims, wherein
information about the depth data is included in
- the data container, e.g., in a header of the data container or in a track header of a track in in the data container, the track containing the depth data, or
- a file which is separate from the data container, e.g., into a configuration file associated with the data container,
optionally, the information about the depth data, e.g., metadata, comprises one or more of the following:
- information on a nature of the depth data,
- information on a processing of the depth data for obtaining one or more depth values,
optionally, the information on the nature of the depth data, comprises one or more of the following:
- information on the method of obtaining the depth data, e.g., depth camera characteristics,
- information on the properties of the depth data, e.g., a near plane and a far plane.
optionally, the information on processing the depth data comprises one or more of the following:
- information for extracting the depth data from the data container, e.g., depth data track identifier, or depth data byte ranges,
- information for decoding the extracted depth data, e.g., codec information, such as codec name, profile and/or level,
- information for pre-processing the depth data, e.g., an indication of inverse depth values, or a non-linear depth ranges distribution,
- post processing the depth data, e.g., a normalization minimum value and a normalization maximum value, or an out of range value.

6. The method of any one of the preceding claims, comprising:
transmitting/receiving the data container over a network, e.g., to/at one or more for the following:
- an application server,
- a service provider,
- a remote device,
wherein, optionally, the data container is
- separated in a plurality of segments or parts for delivery over the network using, e.g., a Common Media Application Format, CMAF, or Dynamic Adaptive Streaming over HTTP, DASH, or
- a packet for delivery over the network using a network packetized stream. e.g. a Real-Time Transport Protocol, RTP, stream.

7. The method of any one of the preceding claims, wherein the data container is a file according to the ISO Base Media File Format, ISOBMFF, and wherein the file comprises a first track including the depth data.

8. The method of claim 7, wherein
one or more second tracks are associated with the first track, the one or more second tracks including second data associated with the scene, and
optionally, the second data associated with the scene comprises one or more of the following:
- additional depth data, e.g., depth data from a different point of view in the scene or depth enhancement data,
- video data, e.g., a YUV stream or an RGB stream,
- timed metadata information, e.g., semantics of the scene, events, or position and/or orientation information.

9. The method of claim 8, wherein
the depth data comprise a base layer with a first depth resolution, and the additional depth data comprises one or more depth enhancement layers for at least a part of the base layer, and
optionally, the one or more depth enhancement layers comprise
- a bit-depth enhancement layer of a video codec used for enhancing the base depth frame, or
- values that represent distances which are further from or closer to the certain point or plane in the scene from which the values represented by the depth data are obtained, or
- values that increase a resolution of a depth pixel, when added to or otherwise combined with the values represented by the depth data.

10. The method of claim 1, wherein encapsulating the depth data comprises:
- receiving raw or encoded depth data,
- creating the data container,
- writing the depth data, e.g., each depth frame, or depth image, or depth matrix, into the data container, wherein the depth data is written into the data container in a timed structure, e.g., in the form of samples of a track according to the ISO Base Media File Format, ISOBMFF,
- writing an explicit signaling or an implicit signaling that indicates that the data container contains depth data, and
- writing metadata on the depth data, wherein timed metadata is written into a timed structure, e.g., a metadata track in accordance with the ISO Base Media File Format, ISOBMFF, and wherein untimed metadata is written into a non-timed structure, e.g. data container header, like a file header.

11. The method of claim 2, wherein retrieving the depth data from the data container comprises:
- receiving the data container, e.g., a file according to the ISO Base Media File Format, ISOBMFF,
- parsing data encapsulated in the data container,
- extracting metadata from the data encapsulated in the data container,
- using the extracted metadata for determining a nature of the depth data, and
- extracting the depth data from the data encapsulated in the data container.

12. A non-transitory computer-readable storage medium comprising instructions which, when executed by a computer, cause the computer to carry out the method of any one of the preceding claims.

13. An apparatus of processing depth data of a scene, the apparatus comprising:
a data processing module for
- encapsulating depth data of the scene in a data container, wherein the depth data is encapsulated independent of other data associated with the scene, or
- retrieving the depth data from a data container, wherein the data container encapsulates depth data of the scene, wherein the depth data is encapsulated independent of other data associated with the scene.

14. A data container encapsulating depth data of the scene, wherein the depth data is encapsulated independent of other data associated with the scene.

15. A data stream having encoded thereinto data on a scene, wherein the data stream comprises:
a data container, the data container encapsulating depth data of the scene, wherein the depth J data is encapsulated independent of other data associated with the scene.
